# FASCICULE DE BREVET EUROPEEN

(11) **EP 1 739 346 B1**
(45) Date de publication et mention de la délivrance du brevet: **13.01.2010**
(21) Numéro de dépôt: 06290981.7
(22) Date de dépôt: 15.06.2006
(51) Int. Cl.: F21V 14/06, F21W 101/10

(54) **Dispositif projecteur antibrouillard avec lentille de projection**
Nebelscheinwerfervorrichtung mit Projektionslinse
Fog lamp with projection lens

(30) Priorité: 30.06.2005 FR 0506741
(43) Date de publication de la demande: 03.01.2007
(73) Titulaire: VALEO VISION, 93012 Bobigny Cedex (FR)
(72) Inventeur: Tronquet, Guillaume, 93100 Montreuil sous Bois (FR)

(56) Documents cités:
- EP-A- 0 275 095
- EP-A- 1 234 716
- FR-A- 2 877 421
- GB-A- 2 274 508
- JP-A- 62 222 505
- US-A- 1 436 655
- US-A- 4 677 532

## Description

La présente invention a pour objet un dispositif projecteur antibrouillard comportant une lentille de projection. Elle a essentiellement pour but de proposer une solution mécanique pour réaliser la fixation de la lentille et le réglage de la position de la lentille de façon particulièrement précise, tout en assurant une compacité optimale du dispositif projecteur antibrouillard et un coût de fabrication réduit

Le domaine de l'invention est, d'une façon générale, celui des projecteurs de véhicule automobile. Dans ce domaine, on connaît différents types de projecteurs, parmi lesquels on trouve essentiellement:
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des feux à fonctionnalité spécifique, de type DRL (Day Running Light en langue anglaise, pour feux de jour);
- des feux antibrouillard.

On connaît par exemple du document EP 1 234 716 un projecteur de véhicule selon le principe de projection, avec un réflecteur et une source lumineuse associée au réflecteur, et au moins une lentille maintenue par un support de lentille, pouvant pivoter autour d'un un axe de pivotement passant au voisinage du foyer de la lentille. Un tel projecteur est notamment destiné à envoyer un faisceau lumineux à l'intérieur des virages dans lesquels le véhicule circule.

Le dispositif projecteur selon l'invention concerne les feux antibrouillard, éventuellement en association avec un autre type de dispositif projecteur.

Comme l'ensemble des dispositifs projecteurs, les dispositifs projecteurs antibrouillards sont constitués essentiellement d'une source lumineuse, par exemple une lampe halogène et d'un réflecteur au sein duquel est disposée la source lumineuse. Dans l'état de la technique, on a privilégié les antibrouillards utilisant des réflecteurs à surface complexe ; le calcul précis des surfaces de réflexion de tels réflecteurs permet d'obtenir directement une ligne de coupure plate conforme aux réglementations en vigueur, celles relatives aux antibrouillards dans le cas présent. Une telle ligne de coupure doit notamment être orienté très légèrement vers le bas par rapport à un plan horizontal centré sur le dispositif projecteur considéré.

Mais de telles réalisations posent un certain nombre de problèmes: d'une part, les dispositifs projecteurs à surface complexe sont encombrants, du fait de leur profondeur et de leur surface frontale importantes ; d'autre part, la nécessité de pouvoir bouger le réflecteur constituant la surface complexe par rapport à la source lumineuse - nécessité découlant de l'obligation de respecter une inclinaison de la ligne de coupure du dispositif antibrouillard - impose la présence d'une ouverture de taille non négligeable au niveau du culot du réflecteur.

Le dispositif selon l'invention répond aux deux problèmes principaux qui viennent d'être exposés. D'une façon générale, on propose dans l'invention de ne plus utiliser, dans les dispositifs projecteurs antibrouillards, de réflecteurs à surfaces complexe, mais de faire intervenir une lentille de projection dans ces projecteurs, tout en assurant un réglage entre la position de ladite lentille et la source lumineuse particulièrement précis, et un maintien optimal de ladite lentille. D'autres avantages, tels qu'une grande compacité, une grande facilité de montage et un coût réduit de fabrication sont également obtenus grâce à l'invention.

A cet effet, dans l'invention, on propose un dispositif antibrouillard présentant un support de lentille dont les fonctions sont multiples : il assure le maintien de la lentille, il coopère avec un élément de réglage pour amener la lentille dans une position telle que les réglementations relatives à l'orientation de la ligne de coupure peuvent être respectées, et il assure un positionnement précis de la lentille par rapport à la source lumineuse.

L'invention concerne donc essentiellement un dispositif projecteur antibrouillard pour véhicule automobile, le dispositif projecteur comportant notamment un boîtier support et une source lumineuse, avec un filament, fixée au boîtier support, le dispositif projecteur antibrouillard comportant une lentille de projection maintenue sur un support de lentille, et une pièce de réglage coopérant avec le support de lentille pour faire pivoter le support de lentille selon un axe de réglage du dispositif projecteur antibrouillard, caractérisé en ce que l'axe de réglage est un axe horizontal parallèle au filament de la source lumineuse.

Le dispositif selon l'invention peut, en complément des caractéristiques principales qui viennent d'être mentionnées, présenter une ou plusieurs des caractéristiques complémentaires suivantes :
- l'axe de réglage est un axe horizontal passant par le filament de la source lumineuse ;
- la pièce de réglage est une vis de réglage de type vis sans fin, coopérant avec une zone filetée du support de lentille pour provoquer le pivotement du support de lentille ;
- le support de lentille comporte une première patte de fixation qui s'étend selon un plan perpendiculaire à un plan de maintien de la lentille, la première patte de fixation comportant une ouverture pour introduire la source lumineuse selon une direction parallèle à l'axe de réglage du dispositif antibrouillard ;
- le support de lentille comporte une seconde patte de fixation supportant la zone filetée du support de lentille ;
- le support de lentille est maintenu au niveau de la première patte de fixation et de la seconde patte de fixation par le boîtier support ;
- soit la première patte de fixation, soit la seconde patte de fixation, est rigide ;
- soit la première patte de fixation, soit la seconde patte de fixation, est souple ;
- la lentille de projection disposée sur le support de lentille est placée au sein d'un élément réflecteur contribuant à la réalisation d'une autre fonction qu'une fonction antibrouillard ;
- l'autre fonction est une fonction DRL;
- la lentille de projection est surmoulée sur le support de lentille;
- la lentille est en verre ;
- le support de lentille est un réflecteur du dispositif projecteur antibrouillard ;
- le réflecteur du dispositif projecteur antibrouillard comporte une ouverture sur une partie latérale pour y introduire la source lumineuse selon une direction parallèle à l'axe de réglage ;
- le réflecteur du dispositif antibrouillard comporte un filetage hélicoïdal, ménagé sur une face extérieure dudit réflecteur, coopérant avec la pièce de réglage pour faire pivoter le support de lentille selon l'axe de réglage ;
- la lentille est réalisée dans une matière plastique ;
- la lentille est prolongée par une première patte latérale et une deuxième patte latérale assurant le maintien de la lentille sur le réflecteur ;
- la lentille est prolongée par au moins une patte latérale assurant le maintien de la lentille sur le réflecteur ;
- le réflecteur du dispositif antibrouillard comporte une première patte de fixation et une seconde patte de fixation pour maintenir ledit réflecteur sur le boîtier du dispositif antibrouillard ;
- la pièce de réglage est maintenue par le boîtier support.

Un autre objet de l'invention est un véhicule automobile équipé d'un dispositif projecteur incluant les caractéristiques principales, et éventuellement une ou plusieurs caractéristiques complémentaires, qui viennent d'être mentionnées.

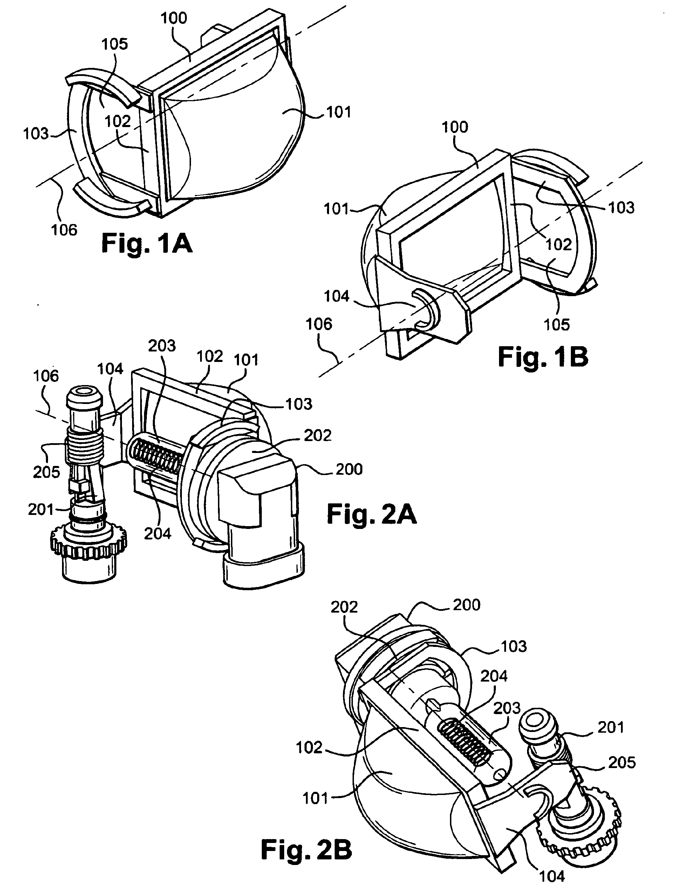

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- aux figures 1-A et 1-B, une première vue et une seconde vue en perspective d'une lentille, maintenue sur son support, intervenant dans un premier exemple de réalisation du dispositif projecteur antibrouillard selon l'invention;
- aux figures 2-A et 2-B, une première vue et une seconde vue en perspective du mécanisme de pivotement intervenant dans le premier exemple de réalisation du dispositif projecteur antibrouillard selon l'invention;
- à la figure 3, une vue en perspective d'un deuxième exemple de réalisation du dispositif projecteur antibrouillard selon l'invention;
- à la figure 4, une vue en coupe et de dessus du deuxième exemple de réalisation du dispositif projecteur antibrouillard selon l'invention ;
- aux figures 5-A et 5-B, une première vue et une seconde vue en perspective d'un troisième exemple de réalisation du dispositif projecteur antibrouillard selon l'invention ;
- à la figure 6, une vue en coupe du troisième exemple de réalisation d'un dispositif projecteur antibrouillard selon l'invention.

Sur les différentes figures, les éléments qui sont communs à plusieurs figures auront conservé, sauf précision contraire, les mêmes références.

Les figures 1-A et 1-B montrent un support de lentille 100 utilisé dans un premier exemple de dispositif projecteur antibrouillard selon l'invention. Le support 100 est essentiellement destiné à maintenir une lentille de projection 101. Dans l'exemple représenté, le maintien de la lentille 101 sur le support 100 est obtenu en surmoulant ledit support sur la lentille ; une telle solution est particulièrement économique puisqu'elle élimine le besoin d'un moyen de fixation supplémentaire ; elle est par ailleurs intéressante en terme de précision dans le placement de la lentille. Dans certains exemples de réalisation de dispositifs antibrouillards selon l'invention, on prévoit cependant la possibilité de fixer la lentille 101 sur le support 100 par d'autres moyens, notamment par clippage, sertissage, collage ou encore fixation par l'intermédiaire d'une pièce supplémentaire.

Dans l'exemple représenté, le support 100, pièce monobloc, est constitué de trois parties distinctes :
- une première partie 102, de forme globalement rectangulaire et creuse, constitue un plan de maintien pour la lentille 101, sensiblement perpendiculaire à l'axe optique du dispositif projecteur selon l'invention dans lequel le support 100 est destiné à être positionné;
- une deuxième partie 103, s'étendant dans un plan sensiblement perpendiculaire au plan de maintien, constitue une première patte de fixation du support de lentille. La première patte de fixation a une forme globalement circulaire et comporte une ouverture 105 de forme globalement circulaire ;
- une troisième partie 104, s'étendant également dans un plan sensiblement perpendiculaire au plan de maintien, dans une sens identique à la première patte de fixation 103 mais depuis un côté opposé du rectangle formant le plan de maintien par rapport au côté supportant la première patte de fixation 103. La deuxième patte de fixation 104 est pleine.

Les figures 2-A et 2-B montrent deux vues en perspectives du support de lentille 100 et de la lentille 101 des figures 1-A et 1-B complétés par une source lumineuse 200 et par une pièce de réglage 201. La source lumineuse est constituée d'un connecteur 202 et d'une ampoule 203, de forme allongée, renfermant un filament 204 s'étendant selon la plus grande dimension de ladite ampoule dans un plan horizontal. L'ampoule 203 est introduite au travers de l'ouverture 105 de la première patte de fixation 103, de façon à positionner l'ampoule 203 en regard de la lentille 101..

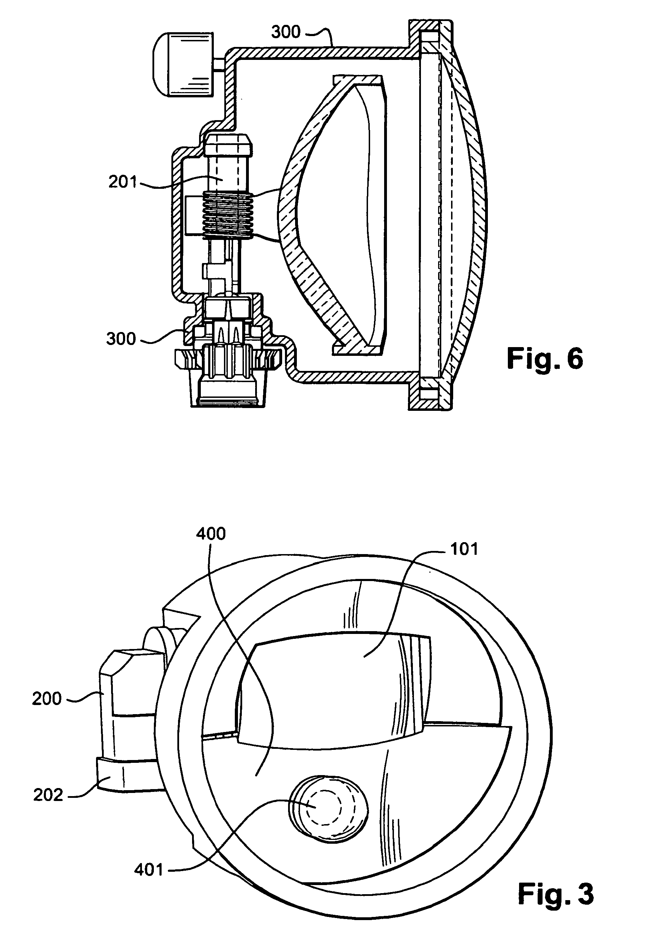

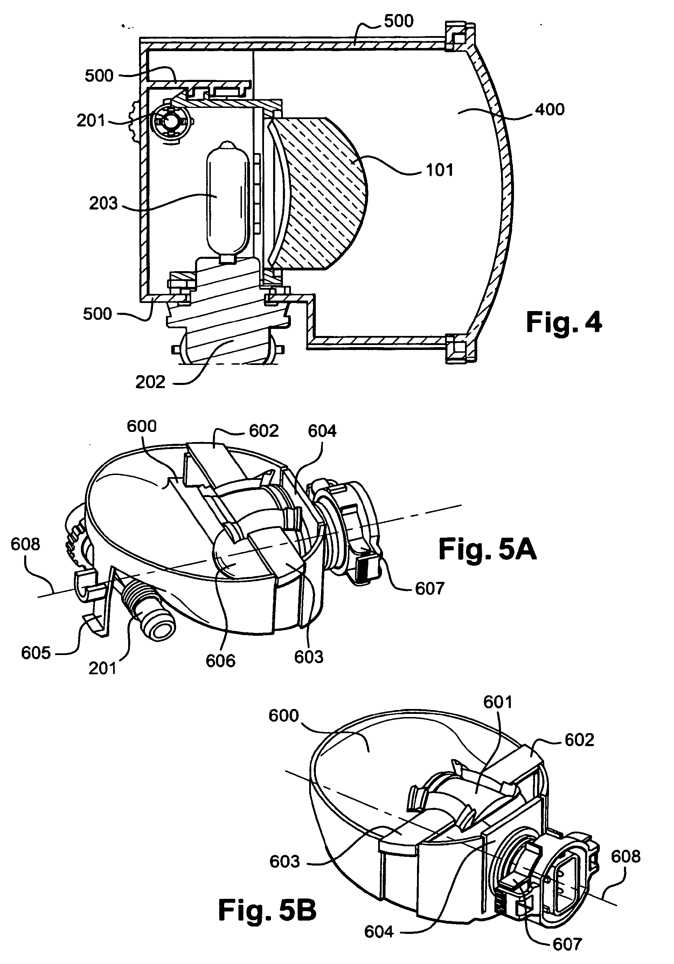

La première patte de fixation 103 et la seconde patte de fixation 104 permettent le maintien du support de lentille 100 dans une contrepartie, dans le cas présent un boîtier support. Un tel boîtier support est représenté avec la référence 500 pour le deuxième exemple de réalisation visible à la figure 4, et avec la référence 300 pour le troisième exemple de réalisation visible à la figure 6. Par exemple, les pattes de fixation sont clippées dans le boîtier 300 ou 500. La source lumineuse 200 est également fixée au boîtier support 300 ou 500, si bien que le positionnement relatif entre la lentille 101, placée sur le support 100, et l'ampoule 203 est assuré de façon très précise. En prévoyant que le support de lentille 100 et la source lumineuse 200 sont tous deux maintenus séparément par le boîtier support 300 ou 500, on peut procéder à des opérations de montage et de démontage de la source lumineuse 200 sans modifier la position de la lentille 101 ; une telle réalisation assure par ailleurs l'étanchéité de l'ensemble constitué par le support de lentille 100 et la source lumineuse 200. Dans certains modes de réalisation, afin de parfaire la précision du positionnement relatif entre la lentille 101 et l'ampoule 203, on prévoit qu'une des deux pattes de fixation 103 ou 104 est rigide. L'autre patte peut, pour les besoins du montage, soit être souple si la partie du boîtier support 300 ou 500 à laquelle elle est rattachée est rigide, soit être rigide si la partie du boîtier support 300 ou 500 à laquelle elle est rattachée est légèrement déformable.

Le maintien, sur le boîtier support 300 ou 500, de la première patte de fixation 103 et de la deuxième patte de fixation 104 est réalisé de manière à permettre un mouvement de rotation, ou pivotement, du support de lentille 100 autour d'un axe 106, dit axe de réglage. L'axe de réglage 106 est parallèle à la direction globale du filament 204. On peut ainsi procéder à une rotation de la lentille 101 par rapport à l'ampoule 203 d'un angle souhaité, dans l'un ou l'autre sens, permettant ainsi le réglage horizontal du faisceau lumineux produit par le dispositif réflecteur antibrouillard selon l'invention. Dans certains cas, l'axe de réglage passe par le filament 204, l'avantage d'une telle réalisation résidant dans le fait qu'un réglage horizontal du faisceau produit peut alors être réalisé sans déformer pour autant ledit faisceau.

La rotation autour de l'axe de réglage 106 est provoquée par l'actionnement de la pièce de réglage 201. Dans les différents exemples représentés, la pièce de réglage 201 est une vis de réglage de type vis sans fin s'étendant verticalement. Elle coopère avec un filet hélicoïdal 205 ménagé, dans l'exemple des figures 1 à 4, au niveau de la seconde patte de fixation 104. Par exemple, le filet hélicoïdal permet de faire évoluer la lentille 101 en rotation selon un angle variant de +5 degrés à -7 degrés par rapport à un plan horizontal passant par le filament 204. La pièce de réglage 201 est, dans certains exemples de réalisation, maintenue par le boîtier support 300 ou 500.

L'association des différents éléments présentés aux figures 2-A et 2-B peuvent être directement intégrés dans un boîtier, servant de boîtier support, pour constituer un dispositif projecteur antibrouillard simple, soit être disposés au sein d'un réflecteur pour intégrer la fonction antibrouillard dans un dispositif projecteur de type différent. Le premier cas correspond à l'exemple montré en coupe, au niveau de la pièce de réglage 201, et vue de droite à la figure 6. Le second cas correspond à l'exemple montré aux figures 3 et 4, où un réflecteur 400 est utilisé pour réaliser, grâce à la présence d'une seconde source lumineuse 401, une fonction DRL. On prévoit, dans cet exemple, de réaliser une ouverture au niveau du culot du réflecteur 400, pour y laisser passer la lentille 101. On obtient ainsi un dispositif projecteur bifonction, cumulant les fonctions antibrouillards et DRL.

Dans une variante de réalisation du dispositif projecteur selon l'invention, montré aux figures 6-A et 6-B, on prévoit qu'un réflecteur 600 soit directement utilisé comme support de lentille. Dans cet exemple, une lentille 601 est maintenue sur le réflecteur 600, par exemple par clippage d'une première patte de maintien 602 et d'une seconde patte de maintien 603 sur une paroi du réflecteur, la première patte de maintien 602 et la deuxième patte de maintien 603 s'étendant de part et d'autre de la lentille 601. Dans d'autres exemples de réalisation, le réflecteur 600 maintient la lentille 601 par collage, ou par la présence de pièces intermédiaires de type agrafe ou bague.

Dans cet exemple, comme dans les exemples précédents, le réflecteur 600 possède une première patte de fixation 604, au niveau d'une partie latérale du réflecteur 600, au travers de laquelle est introduite une source lumineuse constituée, d'une ampoule 606 et d'un connecteur 607, et une seconde patte de fixation 605. lci aussi, la première patte de fixation 604 et la seconde patte de fixation 605 permettent le maintien du réflecteur 600 dans une contrepartie de type boîtier support non représenté. La source lumineuse est également fixée au boîtier support, si bien que le positionnement relatif entre la lentille 601 et l'ampoule 606 est assuré de façon très précise. Là encore, on prévoit, dans certains modes de réalisation, afin de parfaire la précision du positionnement relatif entre la lentille 601 et l'ampoule 606, qu'une des deux pattes de fixation 604 ou 605 soit rigide. L'autre patte peut, pour les besoins du montage, soit être souple si la partie du boîtier support à laquelle elle est rattachée est rigide, soit être rigide si la partie du boîtier support à laquelle elle est rattachée est légèrement déformable.

Le maintien, sur le boîtier support , de la première patte de fixation 604 et de la deuxième patte de fixation 605 est réalisé de manière à permettre un mouvement de rotation, ou pivotement, du réflecteur 600 autour d'un axe de réglage 608, toujours parallèle à la direction globale du filament de l'ampoule 606. On peut ainsi procéder à une rotation de la lentille 601 par rapport à la source lumineuse d'un angle souhaité, dans l'un ou l'autre sens, permettant donc le réglage horizontal du faisceau lumineux produit par le dispositif réflecteur antibrouillard selon l'invention.

La rotation autour de l'axe de réglage 608 est, ici encore, provoquée par l'actionnement de la vis de réglage 201, qui coopère cette fois avec un filet hélicoïdal par exemple ménagé directement sur une face externe du réflecteur 600.

L'exemple de réalisation des figures 5-A, 5-B et 6, qui utilise un réflecteur comme support de lentille, permet, par rapport aux exemples précédents, d'augmenter le flux lumineux récupéré. On peut alors prévoir une source lumineuse moins puissante, qui dégage moins de chaleur ; la lentille 601 peut alors être réalisée dans un matière plastique. Dans les autres exemples précédemment décrits, aux figures 1 à 4, on privilégie l'utilisation de lentilles en verre pour répondre aux contraintes thermiques importantes dues à la présence d'une source lumineuse plus puissante.

## Revendications

1. Dispositif projecteur antibrouillard pour véhicule automobile, le dispositif projecteur comportant notamment un boîtier support (300 ;500) et une source lumineuse (200), avec un filament (204), fixée au boîtier support, le dispositif projecteur antibrouillard (100) comportant une lentille de projection (101 ;601) maintenue sur un support de lentille (100 ;600), et une pièce de réglage coopérant avec le support de lentille pour faire pivoter le support de lentille selon un axe de réglage (106 ;608) du dispositif projecteur antibrouillard, **caractérisé en ce que** l'axe de réglage est un axe horizontal parallèle au filament de la source lumineuse.

2. Dispositif projecteur antibrouillard selon la revendication précédente, **caractérisé en ce que** l'axe de régalage est un axe horizontal passant par le filament de la source lumineuse.

3. Dispositif projecteur antibrouillard selon l'une au moins des revendications précédentes **caractérisé en ce que** la pièce de réglage est une vis de réglage de type vis sans fin, coopérant avec une zone filetée (205) du support de lentille pour provoquer le pivotement du support de lentille.

4. Dispositif projecteur antibrouillard selon l'une au moins des revendications précédentes **caractérisé en ce que** le support de lentille comporte une première patte de fixation (103) qui s'étend selon un plan perpendiculaire à un plan de maintien de la lentille, la première patte de fixation comportant une ouverture (105) pour introduire la source lumineuse selon une direction parallèle à l'axe de réglage du dispositif antibrouillard.

5. Dispositif projecteur antibrouillard selon les revendications 3 et 4, **caractérisé en ce que** le support de lentille comporte une seconde patte de fixation (104) dans laquelle est ménagée la zone filetée du support de lentille.

6. Dispositif projecteur antibrouillard selon l'une au moins des revendications 4 ou 5 **caractérisé en ce que** le support de lentille est maintenu au niveau de la première patte de fixation et de la seconde patte de fixation par le boîtier support.

7. Dispositif projecteur antibrouillard selon l'une au moins des revendications 4 à 6 **caractérisé en ce que** soit la première patte de fixation, soit la seconde patte de fixation, est rigide.

8. Dispositif projecteur antibrouillard selon la revendication précédente **caractérisé en ce que** soit la première patte de fixation, soit la seconde patte de fixation, est souple.

9. Dispositif projecteur antibrouillard selon l'une au moins des revendications 4 à 8 **caractérisé en ce que** la lentille de projection disposée sur le support de lentille est placée au sein d'un élément réflecteur (400) contribuant à la réalisation d'une autre fonction qu'une fonction antibrouillard.

10. Dispositif projecteur antibrouillard selon la revendication précédente **caractérisé en ce que** l'autre fonction est une fonction DRL.

11. Dispositif projecteur antibrouillard selon l'une au moins des revendications 4 à 10 **caractérisé en ce que** la lentille de projection est surmoulée sur le support de lentille.

12. Dispositif projecteur antibrouillard selon l'une au moins des revendications 4 à 11 **caractérisé en ce que** la lentille est en verre.

13. Dispositif projecteur antibrouillard selon l'une au moins des revendications 1 à 3 **caractérisé en ce que** le support de lentille est un réflecteur du dispositif projecteur antibrouillard.

14. Dispositif projecteur antibrouillard selon la revendication précédente **caractérisé en ce que** le réflecteur du dispositif projecteur antibrouillard comporte une ouverture sur une partie latérale pour y introduire la source lumineuse selon une direction parallèle à l'axe de réglage.

15. Dispositif projecteur antibrouillard selon l'une au moins des revendications 13 ou 14 **caractérisé en ce que** le réflecteur du dispositif antibrouillard comporte un filetage hélicoïdal, ménagé sur une face extérieure dudit réflecteur, coopérant avec la pièce de réglage pour faire pivoter le support de lentille selon l'axe de réglage.

16. Dispositif projecteur antibrouillard selon l'une au moins des revendications 13 à 15 **caractérisé en ce que** la lentille est réalisée dans une matière plastique.

17. Dispositif projecteur antibrouillard selon l'une au moins des revendications 13 à 16 **caractérisé en ce que** la lentille est prolongée par au moins patte latérale (602, 603) assurant le maintien de la lentille sur le réflecteur.

18. Dispositif projecteur antibrouillard selon la revendication 17, **caractérisé en ce que** la lentille est prolongée par une première patte latérale (602) et une deuxième patte latérale (603) assurant le maintien de la lentille sur le réflecteur.

19. Dispositif projecteur antibrouillard selon l'une au moins des revendications 13 à 18 **caractérisé en ce que** le réflecteur du dispositif antibrouillard comporte une première patte de fixation (604) et une seconde patte de fixation (605) pour maintenir ledit réflecteur sur le boîtier du dispositif antibrouillard.

20. Dispositif projecteur antibrouillard selon la revendication précédente **caractérisé en ce que** la pièce de réglage est maintenue par le boîtier support.

21. Véhicule automobile équipé d'un dispositif projecteur antibrouillard selon l'une au moins des revendications précédentes.

## Claims

1. Anti-fog headlight device for a motor vehicle, the headlight device comprising in particular a support case (300; 500) and a source of light (200), with a filament (204), which source of light is secured to the support case, the anti-fog headlight device (100) comprising a projection lens (101; 601) which is retained on a lens support (100; 600), and an adjustment part which co-operates with the lens support in order to make the lens support pivot according to an adjustment axis (106; 608) of the anti-fog headlight device, **characterised in that** the adjustment axis is a horizontal axis which is parallel to the filament of the source of light.

2. Anti-fog headlight device according to the preceding claim, **characterised in that** the adjustment axis is a horizontal axis which passes via the filament of the source of light.

3. Anti-fog headlight device according to at least one of the preceding claims, **characterised in that** the adjustment part is an adjustment screw of the worm type, which co-operates with a threaded area (205) of the lens support in order to give rise to the pivoting of the lens support.

4. Anti-fog headlight device according to at least one of the preceding claims, **characterised in that** the lens support comprises a first securing lug (103) which extends according to a plane which is perpendicular to a plane of retention of the lens, the first securing lug comprising an opening (105) in order to introduce the source of light according to a direction which is parallel to the axis of adjustment of the anti-fog device.

5. Anti-fog headlight device according to claims 3 and 4, **characterised in that** the lens support comprises a second securing lug (104) in which the threaded area of the lens support is provided.

6. Anti-fog headlight device according to at least one of claims 4 or 5, **characterised in that** the lens support is retained at the level of the first securing lug and the second securing lug by the support case.

7. Anti-fog headlight device according to at least one of claims 4 to 6, **characterised in that** either the first securing lug or the second securing lug is rigid.

8. Anti-fog headlight device according to the preceding claim, **characterised in that** either the first securing lug or the second securing lug is flexible.

9. Anti-fog headlight device according to at least one of claims 4 to 8, **characterised in that** the projection lens which is disposed on the lens support is placed within a reflector element (400) which contributes towards creation of a function other than an anti-fog function.

10. Anti-fog headlight device according to the preceding claim, **characterised in that** the other function is a DRL function.

11. Anti-fog headlight device according to at least one of claims 4 to 10, **characterised in that** the projection lens is over-moulded on the lens support.

12. Anti-fog headlight device according to at least one of claims 4 to 11, **characterised in that** the lens is made of glass.

13. Anti-fog headlight device according to at least one of claims 1 to 3, **characterised in that** the lens support is a reflector of the anti-fog headlight device.

14. Anti-fog headlight device according to the preceding claim, **characterised in that** the reflector of the anti-fog device comprises an opening on a lateral part, in order to introduce the source of light into it according to a direction which is parallel to the axis of adjustment.

15. Anti-fog headlight device according to at least one of claims 13 or 14, **characterised in that** the reflector of the anti-fog device comprises a helical thread which is provided on an outer surface of the said reflector, and co-operates with the adjustment part in order to make the lens support pivot according to the axis of adjustment.

16. Anti-fog headlight device according to at least one of claims 13 to 15, **characterised in that** the lens is made of plastic material.

17. Anti-fog headlight device according to at least one of claims 13 to 16, **characterised in that** the lens is extended by at least one lateral lug (602, 603) which assures retention of the lens on the reflector.

18. Anti-fog headlight device according to claim 17, **characterised in that** the lens is extended by a first lateral lug (602) and a second lateral lug (603) which assure retention of the lens on the reflector.

19. Anti-fog headlight device according to at least one of claims 13 to 18, **characterised in that** the reflector of the anti-fog device comprises a first securing lug (604) and a second securing lug (605) in order to retain the said reflector on the case of the anti-fog device.

20. Anti-fog headlight device according to the preceding claim, **characterised in that** the adjustment part is retained by the support case.

21. Motor vehicle equipped with an anti-fog headlight device according to at least one of the preceding claims.

## Patentansprüche

1. Nebelscheinwerfer für Kraftfahrzeuge, wobei der Scheinwerfer insbesondere ein Trägergehäuse (300; 500) und eine am Trägergehäuse befestigte Lichtquelle (200) mit einer Glühwendel (204) umfasst, wobei der Nebelscheinwerfer (100) eine auf einem Linsenhalter (100, 600) gehaltene Projektionslinse (101; 601) und ein Verstellelement umfasst, das mit dem Linsenhalter zusammenwirkt, um den Linsenhalter längs einer Verstellachse (106; 608) des Nebelscheinwerfers zu schwenken,
**dadurch gekennzeichnet, dass** die Verstellachse eine zur Glühwendel der Lichtquelle parallele horizontale Achse ist.

2. Nebelscheinwerfer nach dem vorhergehenden Anspruch,
**dadurch gekennzeichnet, dass** die Verstellachse eine durch die Glühwendel der Lichtquelle verlaufende horizontale Achse ist.

3. Nebelscheinwerfer nach wenigstens einem der vorhergehenden Ansprüche,
**dadurch gekennzeichnet, dass** das Verstellelement eine Stellschraube vom Typ Endlosschraube ist, die mit einem Gewindebereich (205) des Linsenhalters zusammenwirkt, um das Schwenken des Linsenhalters zu bewirken.

4. Nebelscheinwerfer nach wenigstens einem der vorhergehenden Ansprüche,
**dadurch gekennzeichnet, dass** der Linsenhalter einen ersten Befestigungsarm (103) aufweist, der sich in einer zu einer Halteebene der Linse senkrechten Ebene erstreckt, wobei der erste Befestigungsarm eine Öffnung (105) zum Einführen der Lichtquelle in einer Richtung parallel zur Verstellachse des Nebelscheinwerfers aufweist.

5. Nebelscheinwerfer nach den Ansprüchen 3 und 4,
**dadurch gekennzeichnet, dass** der Linsenhalter einen zweiten Befestigungsarm (104) aufweist, in dem der Gewindebereich des Linsensträgers ausgebildet ist.

6. Nebelscheinwerfer nach wenigstens einem der Ansprüche 4 oder 5,
**dadurch gekennzeichnet, dass** der Linsenhalter durch das Trägergehäuse auf Höhe des ersten Befestigungsarms und des zweiten Befestigungsarms gehalten ist.

7. Nebelscheinwerfer nach wenigstens einem der Ansprüche 4 bis 6,
**dadurch gekennzeichnet, dass** entweder der erste Befestigungsarm oder der zweite Befestigungsarm starr ist.

8. Nebelscheinwerfer nach dem vorhergehenden Anspruch,
**dadurch gekennzeichnet, dass** entweder der erste Befestigungsarm oder der zweite Befestigungsarm nachgiebig ist.

9. Nebelscheinwerfer nach wenigstens einem der Ansprüche 4 bis 8,
**dadurch gekennzeichnet, dass** die auf dem Linsenhalter angeordnete Projektionslinse in einem Reflektorelement (400) platziert ist, das an der Ausführung einer anderen Lichtfunktion als der Nebellichtfunktion mitwirkt.

10. Nebelscheinwerfer nach dem vorhergehenden Anspruch,
**dadurch gekennzeichnet, dass** die andere Lichtfunktion eine Tagfahrlichtfunktion ist.

11. Nebelscheinwerfer nach wenigstens einem der Ansprüche 4 bis 10,
**dadurch gekennzeichnet, dass** die Projektionslinse auf den Linsenhalter aufgeformt ist.

12. Nebelscheinwerfer nach wenigstens einem der Ansprüche 4 bis 11,
**dadurch gekennzeichnet, dass** die Linse aus Glas ist.

13. Nebelscheinwerfer nach wenigstens einem der Ansprüche 1 bis 3,
**dadurch gekennzeichnet, dass** der Linsenhalter ein Reflektor des Nebelscheinwerfers ist.

14. Nebelscheinwerfer nach dem vorhergehenden Anspruch,
**dadurch gekennzeichnet, dass** der Reflektor des Nebelscheinwerfers eine Öffnung an einem Seitenteil aufweist, um dort die Lichtquelle in einer Richtung parallel zur Verstellachse einzuführen.

15. Nebelscheinwerfer nach wenigstens einem der Ansprüche 13 oder 14,
**dadurch gekennzeichnet, dass** der Reflektor des Nebelscheinwerfers ein an einer Außenseite des Reflektors ausgebildetes schraubenförmiges Gewinde aufweist, das mit dem Verstellelement zusammenwirkt, um den Linsenhalter längs der Verstellachse zu schwenken.

16. Nebelscheinwerfer nach wenigstens einem der Ansprüche 13 bis 15,
**dadurch gekennzeichnet, dass** die Linse aus einem Kunststoff ausgeführt ist.

17. Nebelscheinwerfer nach wenigstens einem der Ansprüche 13 bis 16,
**dadurch gekennzeichnet, dass** die Linse durch wenigstens einen Seitenarm (602, 603) verlängert ist, der den Halt der Linse auf dem Reflektor gewährleistet.

18. Nebelscheinwerfer nach Anspruch 17,
**dadurch gekennzeichnet, dass** die Linse durch einen ersten Seitenarm (602) und einen zweiten Seitenarm (603) verlängert ist, die den Halt der Linse auf dem Reflektor gewährleisten.

19. Nebelscheinwerfer nach wenigstens einem der Ansprüche 13 bis 18,
**dadurch gekennzeichnet, dass** der Reflektor des Nebelscheinwerfers einen ersten Befestigungsarm (604) und einen zweiten Befestigungsarm (605) zum Halten des Reflektors am Nebelscheinwerfergehäuse aufweist.

20. Nebelscheinwerfer nach dem vorhergehenden Anspruch,
**dadurch gekennzeichnet, dass** das Verstellelement durch das Trägergehäuse gehalten ist.

21. Kraftfahrzeug, ausgestattet mit einem Nebelscheinwerfer nach wenigstens einem der vorhergehenden Ansprüche.
